# EUROPÄISCHE PATENTSCHRIFT

(11) **EP 2 517 896 B1**
(45) Veröffentlichungstag und Bekanntmachung des Hinweises auf die Patenterteilung: **15.01.2014**
(21) Anmeldenummer: 12002570.5
(22) Anmeldetag: 12.04.2012
(51) Int. Cl.: B60B 7/18, B60B 7/00, B60B 7/06

(54) **Rad für ein Kraftfahrzeug**
Wheel for a motor vehicle
Roue pour véhicule automobile

(30) Priorität: 26.04.2011 DE 102011018577
(43) Veröffentlichungstag der Anmeldung: 31.10.2012
(73) Patentinhaber: AUDI AG, 85045 Ingolstadt (DE)
(72) Erfinder: Huber, Markus, 85114 Buxheim (DE)
(74) Vertreter: Asch, Konrad

(56) Entgegenhaltungen:
- DE-A1- 19 711 732
- DE-C2- 4 344 051
- US-A- 5 368 370
- US-B1- 7 393 062

## Beschreibung

Die Erfindung betrifft ein Rad für ein Kraftfahrzeug gemäß der im Oberbegriff des Patentanspruches 1 angegebenen Art.

Ein gattungsgemäßes Rad für ein Kraftfahrzeug ist in der DE 197 11 732 A1 offenbart. Wie der in Fig. 4 dargestellten Ausführungsform des Rades zu entnehmen ist, ist eine Felge radaußenseitig mit einer Radzierblende versehen, wobei die Radzierblende mittels einer Verklebung mit der Felge verbunden ist. Als nachteilig erweist sich hierbei insbesondere, dass radrückseitig betrachtet, der für die Befestigung der Radzierblende an die Felge verwandte Klebstoff offen zugänglich ist, so dass dieser ungeschützt Schmutz, Staub, Wasser sowie der von der Bremse abgestrahlten Hitze ausgesetzt ist, was unter Umständen zu einer vorzeitigen Zerstörung der Klebestelle führen könnte.

Bei der in Fig. 5 dargestellten Ausführungsform des Rades ist die Zierblende derart ausgestaltet, dass eine Einwirkung von Schmutz, Wasser, Hitze auf die Klebestelle ausgeschlossen ist. Als nachteilig erweist sich hierbei jedoch der Umstand, dass die Zierblende aufgrund der speziellen Gestaltung aufwändig in der Herstellung ist und die Befestigung erheblich mehr Aufwand erfordert.

Die US 7,393,062 B1 zeigt in den Figuren 5 und 6 ein Rad für ein Kraftfahrzeug mit einer Felge und mehreren Radspeichen, sowie mehrere zwischen den Radspeichen ausgebildete Lüftungsöffnungen und eine radaußenseitig angeordnete, mit einer Felge und/oder den Radspeichen verbundene, die Lüftungsöffnungen zwischen den Radspeichen aussparende Radzierblende, wobei radrückseitig eine, die Lüftungsöffnungen zwischen den Radspeichen aussparende Schutzblende angeordnet ist.

Der Erfindung liegt die Aufgabe zu Grunde, ein Rad für ein Kraftfahrzeug gemäß der im Oberbegriff des Anspruches 1 angegebenen Art derart weiterzubilden, dass ein Eindringen von Schmutz, Staub oder Wasser zwischen Felge und Zierblende bzw. zwischen den Radspeichen des Rades und der Zierblende verhindert wird und zudem eine einfache Herstellung und Montage gewährleistet ist.

Dieser Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

In bekannter Art und Weise umfasst das Rad für ein Kraftfahrzeug eine Felge, mehrere sternförmig angeordnete Radspeichen, mehrere zwischen den Radspeichen ausgebildete Lüftungsöffnungen sowie eine radaußenseitig angeordnete, mit der Felge und/oder den Radspeichen über eine Klebeverbindung fest bzw. unlösbar verbundene Radzierblende. Um eine ausreichende Belüftung einer radrückseitig angeordneten Bremsscheibe zu gewährleisten, weist die Radzierblende ebenfalls mehrere Lüftungsöffnungen auf, die korrespondierend zu den zwischen den Radspeichen ausgebildete Lüftungsöffnungen angeordnet sind. Erfindungsgemäß ist radrückseitig eine als ein separates Bauteil ausgebildete, die Lüftungsöffnung zwischen den Radspeichen aussparende Schutzblende angeordnet. Durch die erfindungsgemäße Anordnung der Schutzblende ist nunmehr in vorteilhafter Weise ein Eindringen von Schmutz, Staub Wasser zwischen Radspeiche und Zierblende nicht mehr möglich. D.h. ein zwischen den Radspeichen und der Zierblende bzw. zwischen Felge und Zierblende vorhandener Klebstoff ist wirksam gegenüber dem Einfluss von Schmutz, Staub, Wasser sowie der von einer Bremse abgestrahlten Hitze geschützt. Durch die erfindungsgemäße Ausbildung der Schutzblende als ein separates Bauteil ist zudem in vorteilhafter Weise eine einfache Herstellung und Montage gewährleistet.

Gemäß einer ersten Ausführungsform der Erfindung ist die Schutzblende derart ausgebildet, dass ausschließlich ein zwischen den Radspeichen und der Radzierblende ausgebildeter Bereich, nachfolgend auch als Verbindungsbereich bezeichnet, abgedeckt ist. Diese Ausführungsform der Schutzblende erweist sich als vorteilhaft, da aufgrund der reduzierten Ausgestaltung der Schutzblende ein geringes Gewicht der Schutzblende gewährleistet ist.

Gemäß einer anderen Ausführungsform der Erfindung ist die Schutzblende derart ausgebildet, dass mit Ausnahme der Lüftungsöffnungen der gesamte radrückseitige Bereich de Felge und der Radspeichen abgedeckt ist. Diese Ausführungsform erweist sich als vorteilhaft, da hierdurch der Verbindungsbereich sowie die Radspeiche vor äußeren Einwirkungen, wie Schmutz, Staub, Wasser und/oder Hitze geschützt sind.

Vorzugsweise ist dabei die Schutzblende lösbar an der Felge, den Radspeichen und/oder der Zierblende befestigt, insbesondere mittels einer Schraub- und/oder Clipsverbindung. Die lösbare Befestigung mittels einer Schraub- und/oder Clipsverbindung erweist sich als vorteilhaft, da hierdurch eine einfache Montage und Demontage gewährleistet ist und somit im Falle einer Beschädigung der Schutzblende ein einfacher Austausch der Schutzblende ermöglicht ist.

Denkbar ist aber auch, dass die Schutzblende unlösbar an der Felge, den Radspeichen und/oder der Zierblende befestigt ist, beispielsweise mittels einer Verklebung. Die unlösbare Befestigung mittels einer Verklebung erweist sich als vorteilhaft, da hierdurch ein verlustsicherer Halt der Schutzblende sichergestellt ist.

Vorzugsweise ist die Zierblende aus einem temperaturbeständigen Kunststoff oder aus Metall hergestellt. Die Ausbildung der Schutzblende aus einem temperaturbeständigen Kunststoff oder aus Metall hat den Vorteil, dass ein ausreichender Schutz und eine hohe Dauerfestigkeit gewährleistet ist.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

Die Erfindung wird im Folgenden anhand des in der Zeichnung dargestellten Ausführungsbeispiels näher beschrieben.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine radaußenseitige Draufsicht auf ein mit einer Zierblende versehenes Kraftfahrzeugrad;
- Fig. 2: eine Schnittdarstellung durch eine Radspeiche des in Fig. 1 dargestellten Kraftfahrzeugrads, wobei radrückseitig betrachtet keine Schutzblende vorhanden ist (Stand der Technik);
- Fig. 3: eine Schnittdarstellung durch eine Radspeiche des in Fig. 1 dargestellten Kraftfahrzeugrads, wobei radrückseitig betrachtet eine erste Ausführungsform der erfindungsgemäßen Schutzblende vorhanden ist, und
- Fig. 4: eine Schnittdarstellung durch eine Radspeiche des in Fig. 1 dargestellten Kraftfahrzeugrads, wobei radrückseitig betrachtet eine zweite Ausführungsform der erfindungsgemäßen Schutzblende vorhanden ist. ist.

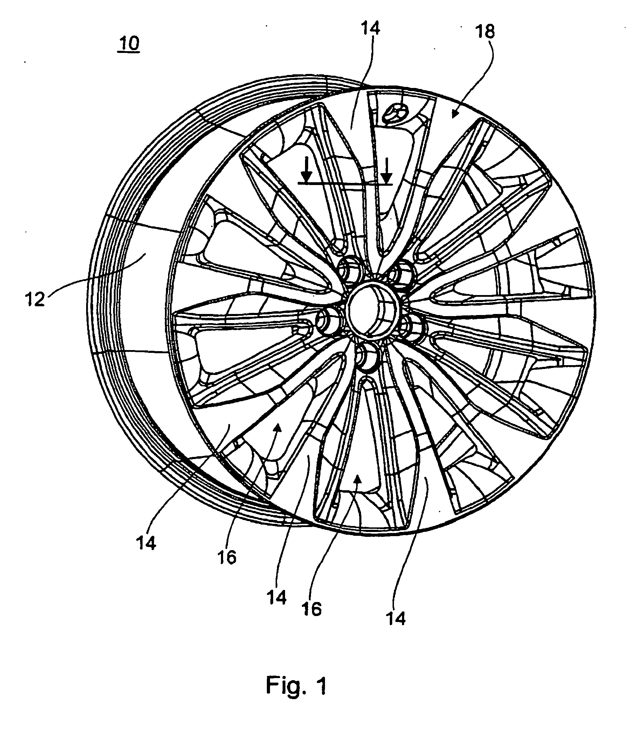

Fig. 1 zeigt ein insgesamt mit der Bezugsziffer 10 bezeichnetes Rad eines Kraftfahrzeugs. Das Rad 10 umfasst eine Felge 12 sowie mehrere Radspeichen 14. Zwischen den Radspeichen 14 sind mehrere Lüftungsöffnungen 16 ausgebildet. Radaußenseitig ist eine Radzierblende 18 angeordnet. Um eine ausreichende Belüftung einer radrückseitig angeordneten Bremsscheibe zu gewährleistet, weist die Radzierblende 18 ebenfalls mehrere Lüftungsöffnungen 16 auf, die korrespondierend zu den zwischen den Radspeichen 14 ausgebildeten Lüftungsöffnungen 16 angeordnet sind.

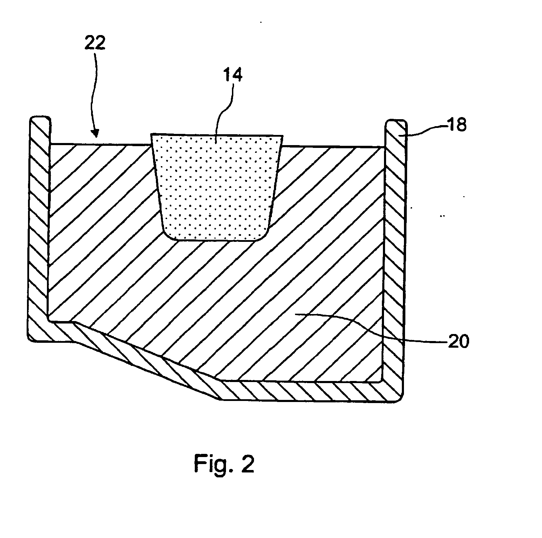

Wie insbesondere aus Fig. 2 ersichtlich ist, ist die Radzierblende 18 mittels einer Klebeverbindung 20 stoffschlüssig mit den Radspeichen 14 verbunden. Ein zwischen Radspeiche 14 und Radzierblende 18 verbleibende Bereich, nachfolgend als Verbindungsbereich 22 bezeichnet, ist nach dem Stand der Technik gegenüber Umwelteinflüssen, wie Schmutz, Wasser, Staub, sowie gegenüber der durch die Bremse abgestrahlten Hitze ungeschützt, was u.U. zu einer Beschädigung und damit einem vorzeitiger Verschleiß der Klebeverbindung 20 zwischen Radspeiche 14 und Radzierblende 18 führen könnte.

Zur Vermeidung der Nachteile des Standes der Technik ist erfindungsgemäß radrückseitig eine als separates Bauteil ausgebildete, die Lüftungsöffnungen 16 zwischen den Radspeichen 14 aussparende Schutzblende 24 vorgesehen, die ein Eindringen von Schmutz, Wasser, Staub oder dergleichen in den Verbindungsbereich 22 verhindert und damit auch die Klebeverbindung 20 ausreichend vor der von der Bremse abgestrahlten Hitze schützt. Aufgrund der Aussparung der zwischen den Radspeichen 14 ausgebildeten Lüftungsöffnungen 16 ist weiterhin eine ausreichende Belüftung der Bremse sichergestellt.

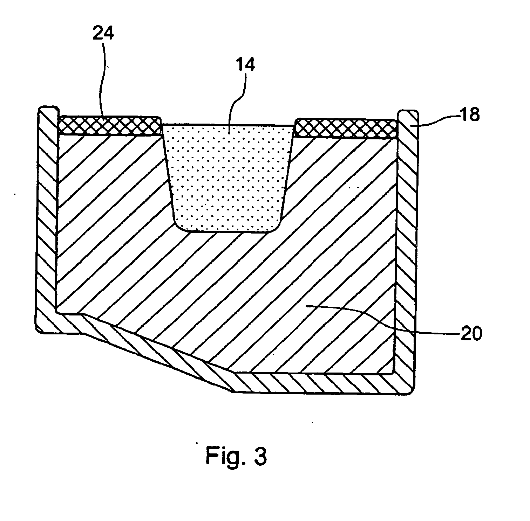

Gemäß der in Fig. 3 dargestellten Ausführungsform ist die Schutzblende 24 dabei derart ausgebildet, dass die Schutzblende 24 ausschließlich den Verbindungsbereich 22 abgedeckt.

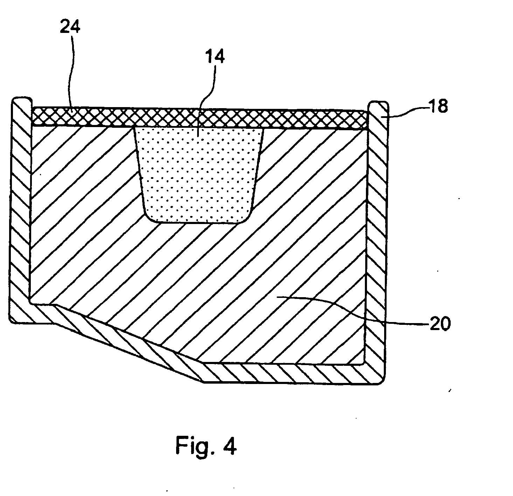

Die in Fig. 4 gezeigte Ausführungsform zeichnet sich dadurch aus, dass die Schutzblende 24 den gesamten radrückseitigen Bereich der Radspeichen 14 sowie der Felge 12 abdeckt. D.h., dass neben dem Verbindungsbereich 22 auch die Speichen 14 und die Felge 12 mittels der Schutzblende 24 abgedeckt und damit vor Umwelteinflüssen geschützt sind.

Die Befestigung der Schutzblende 24 ist bei den beiden gezeigten Ausführungsformen jeweils mittels Verklebung realisiert und die Schutzblende 24 ist aus einem temperaturbeständigen Kunststoff ausgebildet.

### Bezugszeichenliste

- 10: Rad
- 12: Felge
- 14: Radspeiche
- 16: Lüftungsöffnungen
- 18: Radzierblende
- 20: Klebeverbindung
- 22: Verbindungsbereich
- 24: Schutzblende

## Patentansprüche

1. Rad (10) für ein Kraftfahrzeug, umfassend
- eine Felge (12);
- mehrere Radspeichen (14);
- mehrere zwischen den Radspeichen (14) ausgebildete Lüftungsöffnungen (16), sowie
- eine radaußenseitig angeordnete, mit der Felge (12) und/oder den Radspeichen (14) verbundene, die Lüftungsöffnungen (16) zwischen den Radspeichen (14) aussparende Radzierblende (18),
**dadurch gekennzeichnet, dass** radrückseitig an den Radspeichen (14) eine als separates Bauteil ausgebildete, die Lüftungsöffnungen (16) zwischen den Radspeichen (14) aussparende Schutzblende (24) angeordnet ist.

2. Rad (10) für ein Kraftfahrzeug nach Anspruch 1, **dadurch gekennzeichnet, dass** die Schutzblende (24) ausschließlich einen Verbindungsbereich (22) abdeckt.

3. Rad (10) für ein Kraftfahrzeug nach Anspruch 1, **dadurch gekennzeichnet, dass** die Schutzblende (24) mit Ausnahme der Lüftungsöffnungen (16) die gesamte radrückseitige Seite der Felge (12) und der Radspeichen (14) abdeckt.

4. Rad (10) fürein Kraftfahrzeug nach einem der vorangehenden Ansprüche, **dadurch gekennzeichnet, dass** die Schutzblende (24) lösbar an der Felge (12), den Radspeichen (14) und/oder der Radzierblende (18) befestigt ist.

5. Rad (10) für ein Kraftfahrzeug nach Anspruch 4, **dadurch gekennzeichnet, dass** die Schutzblende (24) mittels einer Schraub- oder Clipsverbindung befestigt ist.

6. Rad (10) für ein Kraftfahrzeug nach einem der Ansprüche 1 bis 3, **dadurch gekennzeichnet, dass** die Schutzblende (24) unlösbar an der Felge (12), den Radspeichen (14) und/oder der Radzierblende (18) befestigt ist.

7. Rad (10) für ein Kraftfahrzeug nach Anspruch 6, **dadurch gekennzeichnet, dass** die Schutzblende (24) mittels einer Verklebung befestigt ist.

8. Rad (10) für ein Kraftfahrzeug nach einem der vorangehenden Ansprüche, **dadurch gekennzeichnet, dass** die Schutzblende (24) aus einem temperaturbeständigen Kunststoff oder aus Metall besteht.

## Claims

1. Wheel (10) for a motor vehicle, comprising
- a rim (12);
- a plurality of spokes (14);
- a plurality of ventilation openings (16) formed between the spokes (14), and
- a hub cap (18) which is arranged on the outside of the wheel, is connected to the rim (12) and/or the spokes (14) and leaves the ventilation openings (16) between the spokes (14) open,
**characterised in that** a protective cover (24) which is formed as a separate component and leaves the ventilation openings (16) between the spokes (14) open is arranged on the spokes (14) on the rear side of the wheel.

2. Wheel (10) for a motor vehicle according to claim 1, **characterised in that** the protective cover (24) only covers a connecting region (22).

3. Wheel (10) for a motor vehicle according to claim 1, **characterised in that** the protective cover (24) covers the entirety of the side of the rim (12) and the spokes (14) on the rear side of the wheel, with the exception of the ventilation openings (16).

4. Wheel (10) for a motor vehicle according to any of the preceding claims, **characterised in that** the protective cover (24) is releasably attached to the rim (12), the spokes (14) and/or the hub cap (18).

5. Wheel (10) for a motor vehicle according to claim 4, **characterised in that** the protective cover (24) is attached by means of a screw or clip connection.

6. Wheel (10) for a motor vehicle according to any of claims 1 to 3, **characterised in that** the protective cover (24) is non-releasably attached to the rim (12), the spokes (14) and/or the hub cap (18).

7. Wheel (10) for a motor vehicle according to claim 6, **characterised in that** the protective cover (24) is attached by bonding.

8. Wheel (10) for a motor vehicle according to any of the preceding claims, **characterised in that** the protective cover (24) consists of a temperature-resistant plastics material or of metal.

## Revendications

1. Roue (10) pour véhicule automobile, comprenant :
- une jante (12) ;
- plusieurs rayons de roue (14) ;
- plusieurs ouvertures d'aération (16) formées entre les rayons de roue (14), ainsi que
- un enjoliveur de roue (18) agencé côté extérieur de la roue, relié à la jante (12) et/ou aux rayons de roue (14), ménageant les ouvertures d'aération (16) entre les rayons de roue (14),
**caractérisée en ce que**, côté arrière de la roue, sur les rayons de roue (14), est aménagé un écran de protection (24) conformé en pièce séparée et ménageant les ouvertures d'aération (16) entre les rayons de roue (14).

2. Roue (10) pour véhicule automobile selon la revendication 1, **caractérisée en ce que** l'écran de protection (24) recouvre exclusivement une zone de liaison (22).

3. Roue (10) pour véhicule automobile selon la revendication 1, **caractérisée en ce que** l'écran de protection (24) recouvre la totalité de la face, côté arrière de la roue, de la jante (12) et des rayons de roue (14), à l'exception des ouvertures d'aération (16) .

4. Roue (10) pour véhicule automobile selon l'une quelconque des revendications précédentes, **caractérisée en ce que** l'écran de protection (24) est fixé de manière amovible à la jante (12), aux rayons de roue (14) et/ou à l'enjoliveur de roue (18).

5. Roue (10) pour véhicule automobile selon la revendication 4, **caractérisée en ce que** l'écran de protection (24) est fixé au moyen d'une liaison à vis ou à agrafe.

6. Roue (10) pour véhicule automobile selon l'une quelconque des revendications 1 à 3, **caractérisée en ce que** l'écran de protection (24) est fixé de manière inamovible à la jante (12), aux rayons de roue (14) et/ou à l'enjoliveur de roue (18).

7. Roue (10) pour véhicule automobile selon la revendication 6, **caractérisée en ce que** l'écran de protection (24) est fixé par collage.

8. Roue (10) pour véhicule automobile selon l'une quelconque des revendications précédentes, **caractérisée en ce que** l'écran de protection (24) est constitué de matière plastique ou de métal résistant à la température.
